# EUROPEAN PATENT SPECIFICATION

(11) **EP 3 240 993 B1**
(45) Date of publication and mention of the grant of the patent: **05.12.2018**
(21) Application number: 15813474.2
(22) Date of filing: 11.12.2015
(51) Int. Cl.: G01B 11/25, G01N 21/956

(54) **AN ARRANGEMENT OF OPTICAL MEASUREMENT**
ANORDNUNG EINER OPTISCHEN MESSUNG
AGENCEMENT DE MESURE OPTIQUE

(30) Priority: 29.12.2014 FI 20146152
(43) Date of publication of application: 08.11.2017
(73) Proprietor: Helmee Imaging OY, 33200 Tampere (FI)
(72) Inventor: LEHTONEN, Petri, 02650 Espoo (FI); HOLMLUND, Christer, 02750 Espoo (FI)
(74) Representative: Berggren Oy, Helsinki & Oulu
(86) International application number: PCT/FI2015/050873
(87) International publication number: WO 2016/107969

(56) References cited:
- WO-A1-2014/067000
- US-A1- 2013 141 569
- US-A1- 2014 376 003

## Description

### Field of technology

The present invention relates to an arrangement of optical measurement. The optical measurements are used, for example, in two or three dimensional measurements.

### Prior art

Optical measurements can, for example, be used for measuring two dimensional objects like flat surfaces or three dimensional objects like curved surfaces. There exist different measurement devices depending on features of the object to be measured.

For example, measuring the topography of high-curvature glossy surfaces, i.e. three-dimensional surfaces, associated with various objects has in many occasions turned out difficult. Traditional optical methods are limited to flat surfaces. For small and flat surfaces e.g. interferometers can be used, but they are expensive, slow and provide unacceptable accuracy. Different methods incorporating physical contact with the target objects are also often tedious, provide inferior horizontal resolution and even scratch or otherwise damage the potentially delicate surface under analysis. Such drawbacks are rather comprehensible in the light of point-by-point scanning methods typically applied. Alternative machine vision -based arrangements do not perform too well either, particularly in connection with glossy surfaces.

Shape measurement of high-curvature glossy objects, is indeed generally demanding to say the least. Currently e.g. the quality control of glossy objects is made manually using visual inspection in bright illumination. The outcome of such inspection depends highly of the expertise of the particular human inspector in charge and varies also with time and the manufacturing process itself. Using manual inspection only rather vague qualitative results can be obtained; more characterizing, or at least more exact, numerical values representative of the defects or 3d shape remain practically unrevealed. However, many glossy products are considered as high quality or 'high end' products, whereupon even small defects should be preferably identified during or briefly after the manufacture thereof. WO 2013/102572 illustrates a known arrangement that is suitable for measuring glossy objects.

Another optical method that is suitable for tracking glossy surfaces is based on the use of a flat digital display (e.g. TFT-monitor) and a camera. The display may be arranged to show fringe patterns and the camera may observe patterns as reflected via the tested surface. Analysis regarding the phase changes of the pattern between original and reflected version may then reveal the slope of the surface with reasonable accuracy and overall execution time, but the applicable maximum curvature of the object stays rather limited.

Generally, it is also known to use a digital-light-processing (DLP) projector or liquid-crystal-display (LCD) projector for creating an image with a desired pattern on the surface of a three dimensional (3D) object, and a camera for capturing the image on the surface. The shape of the surface can be determined by analyzing the captured image with the projected image.

There exists a number of different ways to handle timing between the creation of the projected or displayed image or illumination pattern and the capturing of the image by the camera. A period between the creation of the image, like illumination pattern, and the capturing of the image can be enough long in order to be sure the image is really created before the capture by the camera. When using a display for creating the image pattern, refresh rate of the display can be used for triggering the camera. When a huge counting power is useable a great number of images can be captured and the best one can be selected. A long luminance period when triggering the camera has also been used. A V-synch signal of an analog transmission to a projector or display can also be used. A device specific a timing signal generation circuits have also been made. These known solutions are mostly device specific arrangements which are quite hard to generate and uncomfortable to use. The known solutions can also be slow.

US 2014/376003 A1 discloses an arrangement for optically measuring the surface of an optionally glossy target object. The arrangement includes: a diffusive, semi-transparent illumination structure defining a hollow surface shape configured to surround the target object at least partially, the surface being further provided with at least two apertures, a number of light sources optically coupled to the diffusive illumination structure for illuminating the target object via the surface of the illumination structure, at least two imaging devices, each configured to image the target object via an aperture, and a control entity configured to instruct the number of light sources to form a sequence of predetermined illumination patterns illuminating the target object, to instruct the at least two imaging devices to obtain an image of the target object relative to each illumination pattern, and to derive, through the utilization of the patterns utilized and images obtained, a predetermined surface-related property of the target object.

### Short description of invention

The aim of the invention is to alleviate or even eliminate the above said problems relating to the timing between the creation of an image by a projector or another source of the image and the capturing of the image by a camera. The aim is achieved by means that are illustrated in an independent claim. Dependent claims disclose different embodiments of the invention.

An arrangement of a 3D measurement device according to the invention comprises at least one image source or illumination source 1 in order to produce consecutive images 4, 4', 4" on a surface of an object 106, 300, a camera 8 to take pictures of the surface, and a processor unit 111 in order to compare the pictures of the camera with said images. The arrangement comprises also a first area 2 and a second area 3 on the images 4, 4', 4". The first 2 and second 3 area are illuminated on alternate images in such a way that when the first area is illuminated on the image, the second area is not illuminated, and the second area is illuminated on the subsequent image but the first area not. The arrangement further comprises at least one double detector 5 in order to detect the illuminated first area 2 and the illuminated second area 3, and a drive unit 6 in order to trigger at least one camera 8. The drive unit is arranged to trigger the camera if the double detector 5 indicates that a state of the first area changes and a state of the second area changes.

### List of figures

In the following, the invention is described in more detail by reference to the enclosed drawings, where
- Figure 1: illustrates an example of a known measurement device,
- Figure 2: illustrates examples of subsequent images according to the invention,
- Figures 3A and 3B: illustrate examples of measurement arrangements according to the invention,
- Figure 4: illustrates an example of devices of the invention,
- Figure 5: illustrates an example of a drive unit circuit,
- Figure 6: illustrates an example of another drive unit circuit,
- Figures 7A to 7D: illustrates different image signals,
- Figure 8: illustrates different trigger moments,
- Figure 9: illustrates an example of a trigger moment that suits when using several image sources,
- Figure 10: illustrates another example of a drive unit circuit,
- Figure 11: illustrates yet another example of a drive unit circuit,
- Figure 12: illustrates an example of a method according to the invention.

### Description of the invention

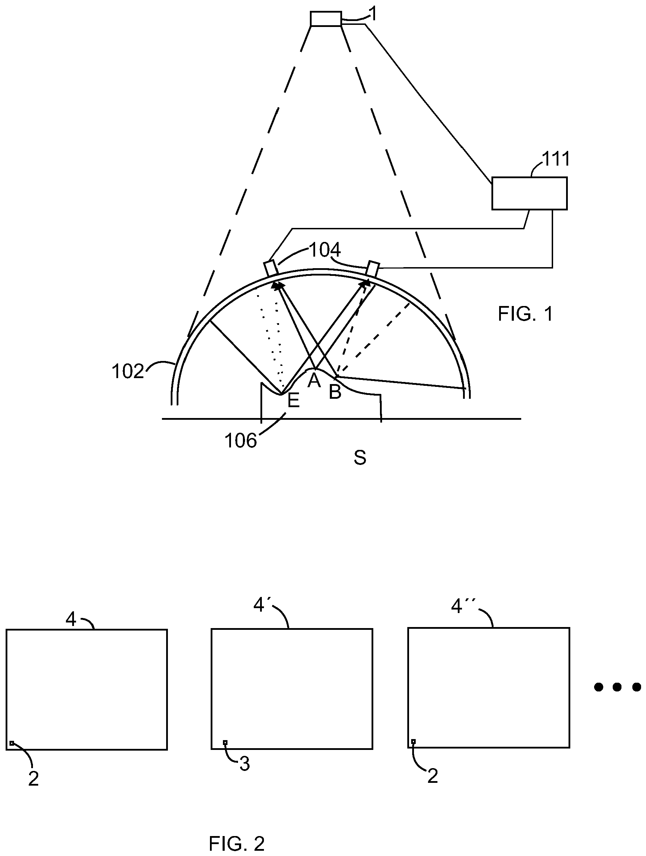

In Figure 1, an embodiment of an illumination structure, essentially a dome structure, 102 is shown for projecting light provided by a number of embedded or at least optically coupled light sources towards a basically free-form target object, or 'sample', 106 disposed on a predetermined carrier surface, such as a ordinary table or sheet, and surrounded by the illumination structure 102 approximately hemispherically, i.e. above the level of the carrier surface. So, the dome provides an illumination display. Alternatively a projector 1 above the dome projects the image on the dome that in turn provide the same image on the surface of the object 106. In some other embodiments, the object 106 could be hung e.g. from a string or be supported by a specific support structure such as a mount, depending on the nature of the illumination structure.

The object 106 may have been substantially centered relative to the illumination structure 102. The illumination structure 102 may generally bear a symmetrical shape as shown in the figure. In this embodiment two light-sensitive sensor devices, or 'imaging devices',104 such as digital cameras in many embodiments have been positioned relative to the illumination structure 102 so as to capture light rays emitted by the light sources and reflected by the sample 106 back towards the structure 102. Advantageously the imaging devices 104 have been aligned to image the same sample area (or sample space) from different angles. For example, small openings called as apertures may have been provided to the structure 102 to enable light transmission through it towards the imaging devices 104. The imaging devices 104 may each contain a substantially planar light-sensitive matrix of multiple imaging elements often called as 'pixels'. The matrix may contain e.g. 1000 x 1000 pixels or more. The arrangement further comprises a processor unit 111 in order to compare the pictures of the camera with said images.

In some other embodiments, a single housing, or a single host apparatus, could contain multiple imaging devices 104 from the standpoint of the present invention, such as multiple camera sensors. Various light rays emitted by the structure 102 and reflecting, from the surface of the sample 106, back towards the structure 102 and especially towards the associated imaging devices 104 have been depicted as solid and dotted lines in the figure for illustrative purposes.

Basically all or at least most points such as points e, a, b explicitly identified in the top surface of the sample 106 that substantially faces the illumination structure 102, may be measured by the arrangement through recognition and analysis of rays propagated between the illumination structure and light-sensitive sensor surfaces of the imaging devices 102, the propagation incorporating reflection phenomenon at the sample 106 surface.

The reflectivity provided by the surface of the sample 106, to be applicable for shape detection, is preferably specular or comprises at least sufficient specular component. It may also contain diffusive component. Even strongly scattering surfaces (matte surfaces) may be analysed in a limited sense by the arrangement as presented hereinafter.

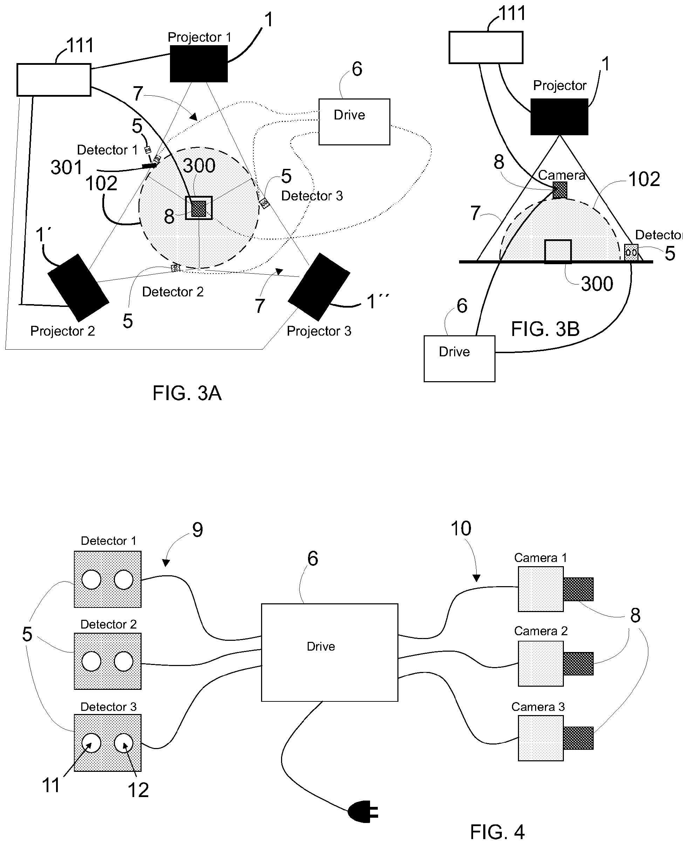

So, figure 1 illustrates the examples of measurement arrangements wherein the invention can be used, and figures 3A and 3B show examples how the invention can be added in measurement arrangements. An inventive arrangement of a 3D measurement device comprises at least one image source 1 in order to produce consecutive images 4, 4', 4" (See figure 2.) on a surface of an object 106, 300, a camera 8 to take pictures of the surface, and a processor unit 111 in order to compare the pictures of the camera with said images. The arrangement further comprises a first area 2 and a second area 3 on the images 4, 4', 4" as showed in figure 2. The first 2 and second 3 area are illuminated on alternate images in such a way that when the first area 2 is illuminated on the image 4, the second area 3 is not illuminated in the same image 4, and the second area 3 is illuminated on the subsequent image 4' but the first area 2 not and so on next images 4".

The arrangement further comprises at least one double detector 5 in order to detect the illuminated first area 2 and the illuminated second area 3, a drive unit 6 in order to trigger at least one camera 8. The drive unit is arranged to trigger the camera if the double detector 5 indicates that a state of the first area changes and a state of the second area changes. It can be noted that unilluminated the first and second areas 2, 3 are implicitly detected as well, if the illumination of the area is not detected.

As can be seen in the example of figure 3A, the arrangement can have more than one image source 1, at this case three image source 1, 1', 1". In this example, each source provides an image on a part of the object 300. Additionally a dome 102 can be between the image sources and the object as described above. So the image can be provided to a certain sector 7 of the object directly or indirectly using for example the diffuse dome 102. One camera 8 is used in the example of figure 3A.

Figure 3B shows another example wherein one image source and one camera is used. Alternatively the dome 102 can be used. The image source 1 can be a projector, TV, or any display that can create an image on the surface of the object. The camera may also be capable to take video.

The double detector 5 comprises two light detectors 11, 12, from which the first detector 11 is for detecting the illumination state of the first area 2 and the second detector 12 is for detecting the illumination state of the second area 3. The double detector can be situated in the sector 7 of the projected image, i.e. on the area onto which the image source projects the image, or outside that area in which case a mirror 301 is situated on the area in order to reflect the first 2 and the second 3 area onto the double detector 5. The first 11 and the second 12 detectors of the double detector 5 can be e.g. photo diodes or photo transistors. The arrangement may comprise additional detectors. The additional detectors can, for example, give more information, like which image of subsequent images is currently projected. E.g. if four detectors is used, four bit sequence code can be implemented to projected image.

Figure 4 shows a schematic drawing of the drive unit 6, the detectors 5, 11, 12 the cameras and the connections 9 between the detectors and the drive unit and connections 10 between the drive unit and cameras. The drive unit 6 is arranged to compare the first detector/s 11 indications of the first area/s 2 and the second detector/s 12 indications of the second area/s 12 to a reference value in order to determine the states of the first area 2 and the second area 3; to detect changes of the states of the first area and the second area; and forming a trigger signal 162 for the camera/s 8 as response for the detected changes of the states.

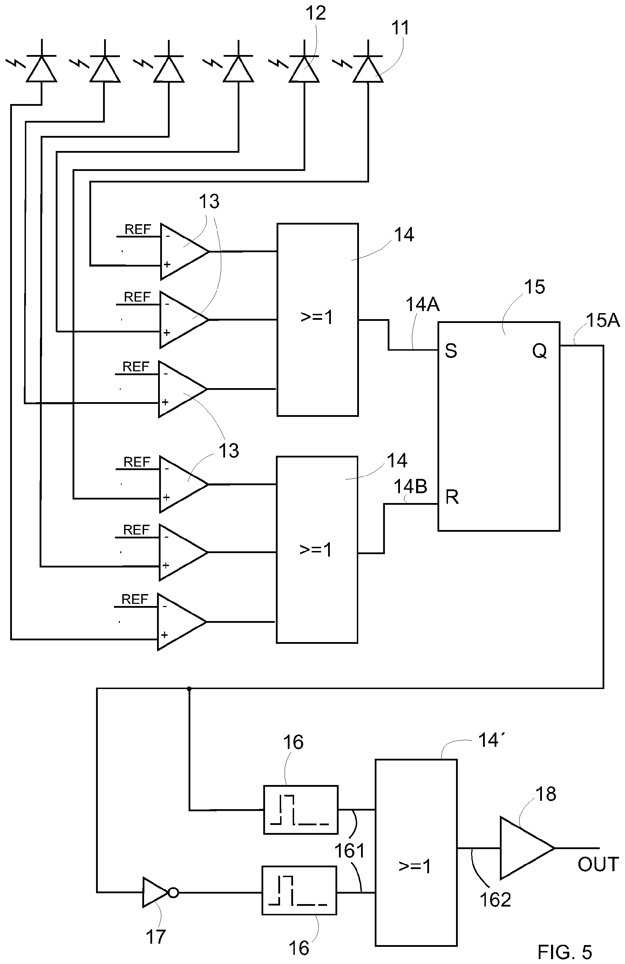

Figure 5 illustrates an example of how the drive unit can be made in more detail manner. The drive unit 6 of figure 5 comprises operation amplifiers 13 that are arranged to compare the first detector/s 11 indications of the first area/s 2 and the second detector/s 12 indications of the second area/s 3 to a reference value in order to determine said states of the first area 2 and the second area 3. The reference value can, for example, be 6V. The figure illustrates several detectors, so there are several images (an several image sources) to be detected. The comparators are in two groups, the first group for the states of the first area, and the second group for the states of the second area, the each group having at least one operational amplifier 13. The number of the operational amplifiers depends on a number of the detectors. At this example the drive unit 6 comprises a logic circuit arrangement 14, 15 in order to detect changes of the states of the first area 2 and the second area 3. The logic circuits 14 are OR-circuits, so when any one of the amplifiers 13 of the group indicate that the area (the first or second) is illuminated, the output 14A, 14B of the specific OR -circuit is 1. If the illumination is not detected, the output is 0. The other type logic circuit 15, such as a Flip-Flop SR -circuit, gives output 0 or 1 indicating which one of the areas is illuminated and which one is not. The change of the output 15A (0 to 1 or 1 to 0) triggers one of the pulse forming circuits 16. If the pulse 161 is formed by one of the pulse forming circuits, the other OR-circuit 14' gives a trigger pulse 162 that is sent to the camera/s 8 in order to trigger it/them. If the trigger pulse as such is not suitable for the camera it can be further modified by a modification circuit 18 (illustrated schematically as an operational amplifier) like providing a suitable voltage level, etc. As can be seen, the circuit also has an inverter 17 before the other pulse forming circuit 16.

As can be noted, the state changes of the both areas should is detected before the trigger signal is performed and transmitted to the camera or cameras. The state is illuminated or unilluminated which can be indicated as 1 and 0, or high and low for example. So the trigger signal is performed when the state of the first area changes from the illuminated state to the unilluminated state and the state of the second area changes from the unilluminated state to the illuminated state. The trigger signal is also performed when the state of the first area changes from the unilluminated state to the illuminated state and the state of the second area changes from the illuminated state to the unilluminated state. The image data with respect to the first and the second area determines whether the areas are illuminated or unilluminated when projecting the image.

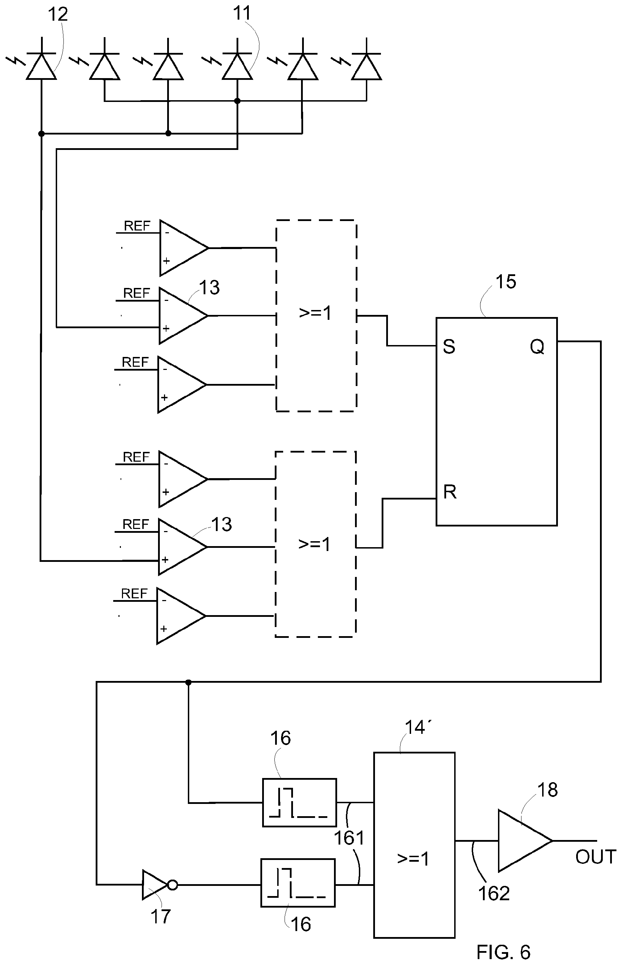

Figure 6 illustrates a modification of the circuit of figure 5. The circuit of figure 6 may be more suitable for triggering the camera/s if the delays between the image sources are larger than the period of one image. The first detectors 11 are connected in parallel in order to produce one input to the amplifier 13 of the group. The reference value is different in this case, for example 10 V, and all of the first detectors are needed to indicate the illuminations of the first areas in order that the operational amplifier gives an output indicating the illumination. Similarly, the second detectors are connected in parallel. Otherwise the function of the circuit is similar with the circuit of figure 5.

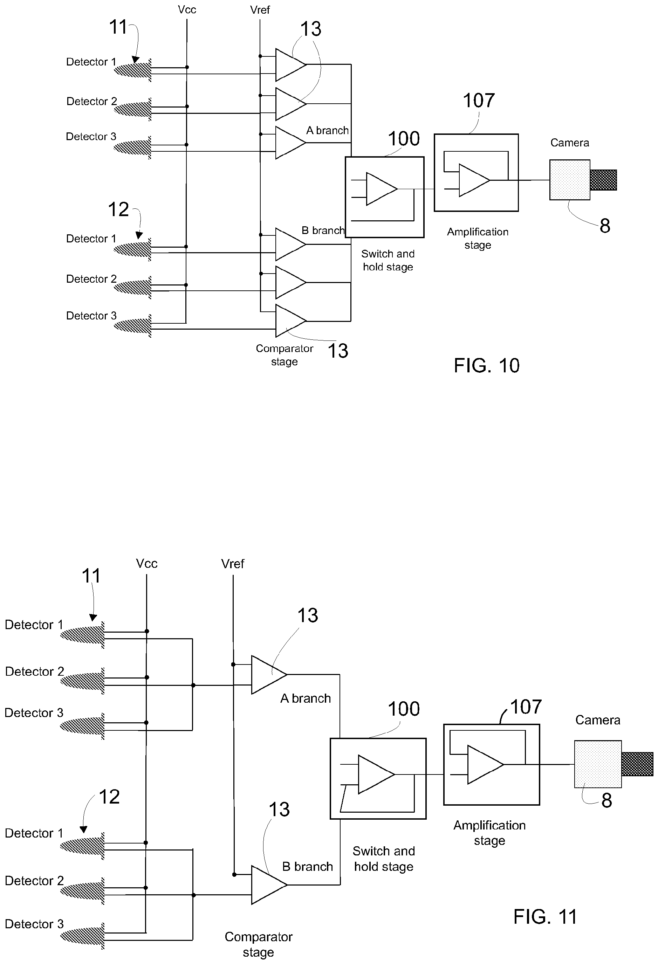

Figures 10 and 11 illustrates schematically respective circuits as figures 5 and 6, but in these embodiments the circuits are made in another ways. The drive unit 6 has an operational amplifier circuit arrangement 100 in order to detect changes of the states of the first area and the second taking care of the tasks of the circuits 14, 15, 16, 14' of the embodiment of figure 5. If needed the circuit may also comprise a circuit 107 in order to further modify the trigger signal 162. As can be noted the circuit of the drive unit can be made in many forms.

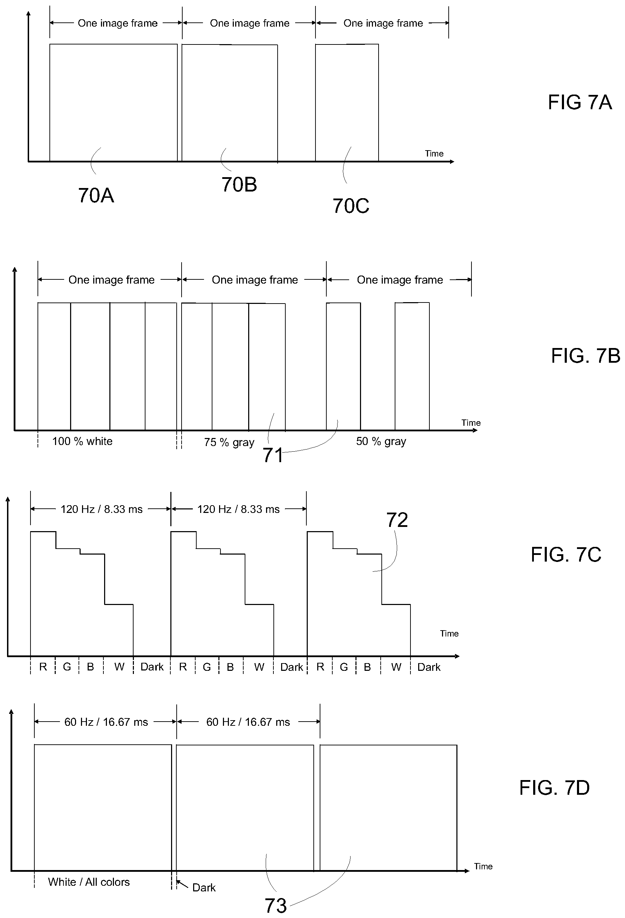

Timing of triggering the cameras in relation to timing of the projected images is important. Figures 7A to 7D illustrates different images signals. Figure 7A shows a image signals made by a pulse width modulation (PWM) technique. The width of the pulse indicates the value of the signal. In this example the first pulse 70A shows a white color (100%), the second pulse 70B shows a grey of 75% with respect to white, and the third pulse 70C shows a grey of 50% of white. Figure 7B illustrates a pulse density modulation (PDM) technique wherein a number of pulses 71 in the period of an image indicates the value. In this example, the first image is white, the second is 75 % grey, and the third image is 50% grey. Figure 7C illustrates an example how colors of an image are projected from a DLP-projector (digital-light-projecting projector). In this kind of signal, the colors of an image are projected separately in the time sequence of the image. R means red, G is green, and B is blue, and W means white in figure 7C. PWM or PDM can be used in each color. Figure 7D shows how a LCD (liquid crystal display) projector performs an image. All colors are projected simultaneously. Intensity of light can be provided by PWM or PDM.

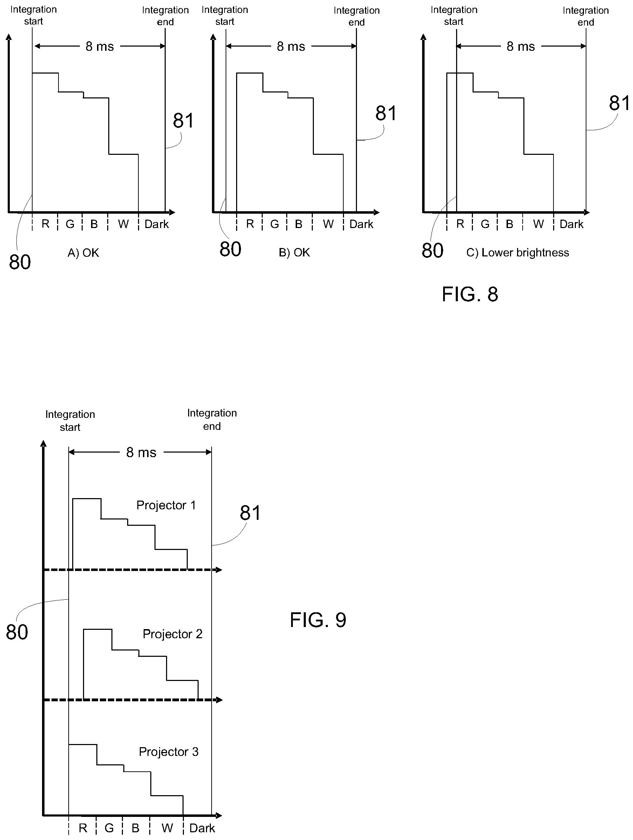

As can be noted in figures 7A to 7D each image has a longer dark period(s), typically at the end of the image period. It means that intensity of pictures taken by the camera/s can vary significantly depending on when the camera is triggered. The intensity variations decrease the quality of the picture processing by the processor unit 111. Figure 8 illustrates the effect of the trigger timing. If the trigger time 80 is in the image period at the moment when the illumination starts as the period A) shows, or just before it as the period B) shows, the trigger timing is ok. This is due, because all illumination of the images are inside the image period before the end 81 of the period. However, if the trigger time is after the illumination starts as the period C) shows, the part of illumination is out of the period i.e. exposing time of the camera, which means darker picture taken by the camera.

As can be noted an image light coming from the image source has pulsing nature within each image. If one detector were used, several triggering pulses would be created during one image. Therefore two detectors are used which form a double detector.

Figure 9 illustrates a situation wherein three image sources like projectors are used. Because delays between different image sources are usually quite small, it is fine that the trigger time of the camera or cameras is arranged to be performed at the moment when the illumination starts first in any of the images. At this example, the projector 3 is the first projector starting the illumination. If the delays are longer than the image period, the circuit arrangements like showed in figures 6 and 11 can be used.

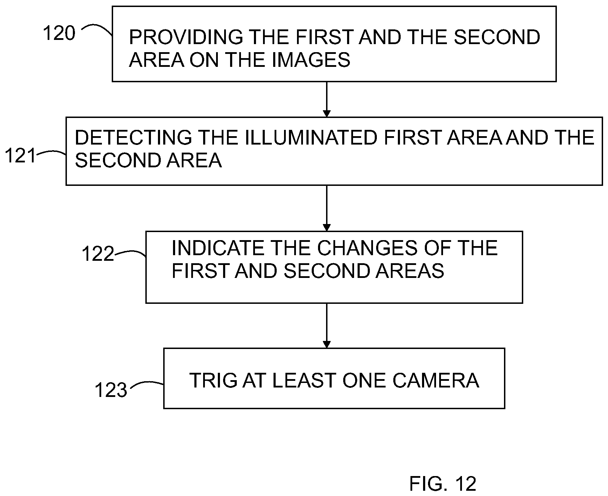

Figure 12 show an example of a method for a 3D measurement device according to the invention. The method is for the device that comprises at least one image source in order to produce consecutive images on a surface of an object, a camera to take pictures of the surface, and a processor unit in order to compare the pictures of the camera with said images. The method comprises steps to provide 120 a first area and a second area on the images, the first and second area being illuminated on alternate images in such a way that when the first area is illuminated on the image, the second area is not illuminated, and the second area is illuminated on the subsequent image but the first area not; to detect 121 the illuminated first area and the illuminated second area; to indicate 122 that a state of the first area changes and a state of the second area changes as response to the detection; and to trigger 123 at least one camera, as response to the indication of the changes of the states.

In addition the indication phase may comprise the steps to compare the indications of the first area/s and the second area/s to a reference value in order to determine the states of the first area and the second area; and to detect changes of the states of the first area and the second area.

As already illustrated above there are many ways to perform the invention. The image source can for example be the above said diffusive and translucent dome into which a plurality of light sources such as LEDs (optionally at least functionally organized as a LED matrix) has been arranged to optically couple to the illumination structure such that desired illumination patterns may be established and conveyed by the dome towards the sample for subsequent imaging. Optionally, LED chips or LED packages can been embedded in the material of the dome. Alternatively or additionally, a data projector (like LCD or DLP projector) or e.g. a slide projection system could be utilized as light sources or displays, TVs, monitors.

Camera such as CMOS or CCD cameras can be used to image the sample by sensing light reflected from the object 206.

The processing unit 1' can comprise a processing device, memory, and I/O elements (e.g. for a data transfer or communication interface, data visualization element such as a display, printer or plotter, a data input element such as a keyboard, a mouse etc.) The processor unit 111 may form or be formed from a more general computer device that is suitable for other uses as well. The processing unit may include a microprocessor, microcontroller, a DSP, programmable logic array, or a desired plurality of any of those, for instance. The memory may comprise at least one dedicated memory chip or memory integrated with the processor, for instance. The memory may be configured to accommodate a computer program comprising code elements in the form of computer-executable instructions and related other data for controlling the arrangement. Further, the memory may be utilized to host the measurement data and associated analysis results.

The computer program may be embodied on a carrier medium such as a memory card or an optical disc. The size of inventive arrangement can be scalable in view of different sample sizes and e.g. light sources.

Control of the intensity of light emitted by the image sources may be realized utilizing e.g. current control or more accurate pulse width or pulse density modulation, for instance. Light source such as LED -specific control may be flexibly achieved through e.g. row and column -based scan of the light source matrix.

Illumination pattern changes involving light source control can be synchronized relative to the triggers of the cameras to increase measurement speed, for example. The triggering speed can be equal with a refresh rate of the image source. The invention takes care of problems relating to the intensity changes of the subsequent images and delays between the several image sources.

The invention can be used with one or several image sources or with one or several cameras. The inventive arrangement is independent of used devices like projectors or cameras and it is also cost effective and relative simple arrangement.

It is evident from the above that the invention is not limited to the embodiments described in this text but can be implemented in many other different embodiments within the scope of the claims.

## Claims

1. An arrangement of an optical measurement device, which device comprises at least one image source (1, 1', 1") in order to produce consecutive images (4, 4', 4") on a surface of an object (106, 300), at least one camera (8) to take pictures of the surface, and a processor unit (111) in order to compare the pictures of the at least one camera with said images, **characterised in that** the arrangement comprises a first area (2) and a second area (3) on the images (4, 4', 4"), the first (2) and second (3) area being illuminated on alternate images in such a way that when the first area is illuminated on the image, the second area is not illuminated, and the second area is illuminated on the subsequent image but the first area not,
the arrangement further comprising at least one double detector (5) in order to detect the illuminated first area (2) and the illuminated second area (3), a drive unit (6) in order to trigger at least one camera (8), the drive unit being arranged to trigger the camera if the double detector (5) indicates that a state of the first area changes and a state of the second area changes.

2. An arrangement according to Claim 1, **characterised in that** the double detector (5) comprises two light detectors (11, 12), from which the first detector (11) is for detecting the illumination state of the first area (2) and the second detector (12) is for detecting the illumination state of the second area (3).

3. An arrangement according to Claim 2, **characterised in that** the drive unit (6) is arranged to compare the first detector/s (11) indications of the first area/s (2) and the second detector/s (12) indications of the second area/s (12) to a reference value in order to determine the states of the first area (2) and the second area (3); to detect changes of the states of the first area and the second area; and forming a trigger signal (162) for the camera/s (8) as response for the detected changes of the states.

4. An arrangement according to Claim 3, **characterised in that** the drive unit (6) is also arranged to further modify the trigger signal (162).

5. An arrangement according to Claim 3 or 4, **characterised in that** the double detector (5) is situated on the area onto which the image source projects the image, or outside that area in which case a mirror (301) is situated on the area in order to reflect the first (2) and the second (3) area onto the double detector (5).

6. An arrangement according to Claim 5, **characterised in that** the first (11) and the second (12) detectors of the double detector (5) are photo diodes or photo transistors.

7. An arrangement according to Claim 5 or 6, **characterised in that** the image source (1) is a projector, TV, or any display.

8. An arrangement according to any of the Claims from 5 to 7, **characterised in that** a diffuse and translucent dome (102) exits between the image source (1) and the object (106).

9. An arrangement according to any of the Claims from 1 to 8, **characterised in that** the arrangement comprises additional light detectors (5).

10. An arrangement according to any of the Claims from 3 to 9, **characterised in that** the drive unit (6) comprises operation amplifiers (13) that are arranged to compare the first detector/s (11) indications of the first area/s (2) and the second detector/s (12) indications of the second area/s (3) to a reference value in order to determine said states of the first area (2) and the second area (3), which comparators are in two groups, the first group for the states of the first area, and the second group for the states of the second area, the each group having at least one operational amplifier (13).

11. An arrangement according to Claim 10, **characterised in that** the drive unit (6) comprises a logic circuit arrangement (14, 15) in order to detect changes of the states of the first area (2) and the second area (3).

12. An arrangement according to Claim 10, **characterised in that** the drive unit (6) comprises an operational amplifier circuit arrangement (100) in order to detect changes of the states of the first area and the second.

13. An arrangement according to Claim 11 or 12, **characterised in that** the drive (6) unit comprises a further circuit arrangement (107) in order to form the trigger signal (162).

14. A method for an optical measurement device, which device comprises at least one image source in order to produce consecutive images on a surface of an object, at least one camera to take pictures of the surface, and a processor unit in order to compare the pictures of the camera with said images, **characterised in that** method comprises steps of
to provide (120) a first area and a second area on the images, the first and second area being illuminated on alternate images in such a way that when the first area is illuminated on the image, the second area is not illuminated, and the second area is illuminated on the subsequent image but the first area not,
to detect (121) the illuminated first area and the illuminated second area,
to indicate (122) that a state of the first area changes and a state of the second area changes as response to the detection, and
to trigger (123) at least one camera, as response to the indication of the changes of the states.

15. A method according to Claim 14, **characterised in that** the indication phase comprises the steps of
to compare the indications of the first area/s and the second area/s to a reference value in order to determine the states of the first area and the second area;
to detect changes of the states of the first area and the second area.

## Patentansprüche

1. Anordnung einer optischen Essvorrichtung, wobei die Vorrichtung mindestens eine Bildquelle (1, 1', 1"), um aufeinander folgende Bilder (4, 4', 4") auf einer Oberfläche eines Objekts (106, 300) zu erzeugen, mindestens eine Kamera (8), um Bilder von der Oberfläche aufzunehmen, und eine
Prozessoreinheit (111) umfasst, um die Bilder der mindestens einen Kamera mit den Bildern zu vergleichen, **dadurch gekennzeichnet, dass** die Anordnung einen ersten Bereich (2) und einen zweiten Bereich (3) auf den Bildern (4, 4', 4") umfasst, wobei der erste (2) und der zweite (3) Bereich auf alternierenden Bildern in einer solchen Weise beleuchtet werden, dass, wenn der erste Bereich auf dem Bild beleuchtet ist, der zweite Bereich nicht beleuchtet ist, und der zweite Bereich auf dem nachfolgenden Bild beleuchtet ist, der erste Bereich jedoch nicht,
die Anordnung ferner mindestens einen doppelten Detektor (5), um den beleuchteten ersten Bereich (2) und den beleuchteten zweiten Bereich (3) zu detektieren, eine Antriebseinheit (6) umfasst, um mindestens eine Kamera (8) auszulösen, wobei die Antriebseinheit angeordnet ist, um die Kamera auszulösen, falls der doppelte Detektor (5) angibt, dass sich ein Zustand des ersten Bereichs ändert und ein Zustand des zweiten Bereichs ändert.

2. Anordnung nach Anspruch 1, **dadurch gekennzeichnet, dass** der doppelte Detektor (5) zwei Lichtdetektoren (11, 12) umfasst, von denen der erste Detektor (11) zum Detektieren des Beleuchtungszustands des ersten Bereichs (2) dient und der zweite Detektor (12) zum Detektieren des Beleuchtungszustands des zweiten Bereichs (3) dient.

3. Anordnung nach Anspruch 2, **dadurch gekennzeichnet, dass** die Antriebseinheit (6) angeordnet ist, um die Angaben des ersten Detektor/der ersten Detektoren (11) des ersten Bereichs/der ersten Bereiche (2) und die Angaben des zweiten Detektors/der zweiten Detektoren (12) des zweiten Bereichs/der zweiten Bereiche (12) mit einem Referenzwert zu vergleichen, um die Zustände des ersten Bereichs (2) und des zweiten Bereichs (3) zu bestimmen; um Änderungen der Zustände des ersten Bereichs und des zweiten Bereichs zu detektieren; und um ein Auslösesignal (162) für die Kamera (s) (8) in Reaktion auf die detektierten Änderungen der Zustände zu bilden.

4. Anordnung nach Anspruch 3, **dadurch gekennzeichnet, dass** die Antriebseinheit (6) auch angeordnet ist, um das Auslösesignal (162) weiter zu modifizieren.

5. Anordnung nach Anspruch 3 oder 4, **dadurch gekennzeichnet, dass** der doppelte Detektor (5) sich auf dem Bereich, auf den die Bildquelle das Bild projiziert, oder außerhalb jenes Bereichs befindet, wobei sich in diesem Fall ein Spiegel (301) auf dem Bereich befindet, um den ersten (2) und den zweiten (3) Bereich auf den doppelten Detektor (5) zu spiegeln.

6. Anordnung nach Anspruch 5, **dadurch gekennzeichnet, dass** der erste (11) und der zweite (12) Detektor des doppelten Detektors (5) Photodioden oder Phototransistoren sind.

7. Anordnung nach Anspruch 5 oder 6, **dadurch gekennzeichnet, dass** die Bildquelle (1) ein Projektor, TV oder eine beliebige Anzeige ist.

8. Anordnung nach einem der Ansprüche von 5 bis 7, **dadurch gekennzeichnet, dass** eine diffuse und durchscheinende Wölbung (102) zwischen der Bildquelle (1) und dem Objekt (106) vorhanden ist.

9. Anordnung nach einem der Ansprüche von 1 bis 8, **dadurch gekennzeichnet, dass** die Anordnung zusätzliche Lichtdetektoren (5) umfasst.

10. Anordnung nach einem der Ansprüche 3 bis 9, **dadurch gekennzeichnet, dass** die Antriebseinheit (6) Operationsverstärker (13) umfasst, die angeordnet sind, um die Angaben des ersten Detektors/die ersten Detektoren (11) des ersten Bereichs/der ersten Bereiche (2) und die Angaben des zweiten Detektors/der zweiten Detektoren (12) des zweiten Bereichs/der zweiten Bereiche (3) mit einem Referenzwert zu vergleichen, um die Zustände des ersten Bereichs (2) und des zweiten Bereichs (3) zu bestimmen, wobei die Komparatoren in zwei Gruppen vorliegen, wobei die erste Gruppe für die Zustände des ersten Bereichs dient und die zweite Gruppe für die Zustände des zweiten Bereichs dient, wobei jede Gruppe mindestens einen Operationsverstärker (13) aufweist.

11. Anordnung nach Anspruch 10, **dadurch gekennzeichnet, dass** die Antriebseinheit (6) eine Logikschaltungsanordnung (14, 15) umfasst, um Änderungen der Zustände des ersten Bereichs (2) und des zweiten Bereichs (3) zu detektieren.

12. Anordnung nach Anspruch 10, **dadurch gekennzeichnet, dass** die Antriebseinheit (6) eine Operationsverstärkerschaltungsanordnung (100) umfasst, um Änderungen der Zustände des ersten Bereichs und des zweiten zu detektieren.

13. Anordnung nach Anspruch 11 oder 12, **dadurch gekennzeichnet, dass** die Antriebseinheit (6) eine weitere Schaltungsanordnung (107) umfasst, um das Auslösesignal (162) zu bilden.

14. Verfahren für eine optische Messvorrichtung, wobei die Vorrichtung mindestens eine Bildquelle, um aufeinander folgende Bilder auf einer Oberfläche eines Objekts zu erzeugen,
mindestens eine Kamera, um Bilder der Oberfläche aufzunehmen, und eine Prozessoreinheit umfasst, um die Bilder der Kamera mit den Bildern zu vergleichen, **dadurch gekennzeichnet, dass** das Verfahren die Schritte umfasst: Bereitstellen (120) eines ersten Bereichs und eines zweiten Bereichs auf den Bildern, wobei der erste und der zweite Bereich auf alternierenden Bildern in einer solchen Weise beleuchtet werden, dass, wenn der erste Bereich auf dem Bild beleuchtet ist, der zweite Bereich nicht beleuchtet ist, und der zweite Bereich auf dem nachfolgenden Bild beleuchtet ist, der erste Bereich jedoch nicht,
Detektieren (121) des beleuchteten ersten Bereichs und des beleuchteten zweiten Bereichs,
Angeben (122), dass sich ein Zustand des ersten Bereichs ändert und der Zustand des zweiten Bereichs ändert, als Reaktion auf die Detektierung, und
Auslösen (123) von mindestens einer Kamera als Reaktion auf die Änderungen der Zustände.

15. Verfahren nach Anspruch 14, **dadurch gekennzeichnet, dass** die Angabephase die Schritte umfasst:
Vergleichen der Angaben des ersten Bereichs/der ersten Bereiche und des zweiten Bereichs/der zweiten Bereiche mit einem Referenzwert, um die Zustände des ersten Bereichs und des zweiten Bereichs zu bestimmen;
Detektieren von Änderungen der Zustände des ersten Bereichs und des zweiten Bereichs.

## Revendications

1. Agencement d'un dispositif de mesure optique, lequel dispositif comprend au moins une source d'image (1, 1', 1") afin de produire des images (4, 4', 4") consécutives sur une surface d'un objet (106, 300), au moins une caméra (8) pour prendre des photos sur la surface, et une unité de processeur (111) afin de comparer les photos de l'au moins une caméra avec lesdites images,
**caractérisé en ce que** l'agencement comprend une première zone (2) et une deuxième zone (3) sur les images (4, 4", 4"), les première (2) et deuxième (3) zones étant éclairées sur des images en alternance de telle façon que lorsque la première zone est éclairée sur l'image, la deuxième zone n'est pas éclairée, et la deuxième zone est éclairée sur l'image suivante mais pas la première zone,
l'agencement comprenant en outre au moins un double détecteur (5) afin de détecter la première zone (2) éclairée et la deuxième zone (3) éclairée, une unité d'entraînement (6) afin de déclencher au moins une caméra (8), l'unité d'entraînement étant agencée pour déclencher la caméra si le double détecteur (5) indique qu'un état de la première zone change et qu'un état de la deuxième zone change.

2. Agencement selon la revendication 1, **caractérisé en ce que** le double détecteur (5) comprend deux détecteurs de lumière (11, 12) desquels le premier détecteur (11) est pour détecter l'état d'éclairage de la première zone (2) et le deuxième détecteur (12) est pour détecter l'état d'éclairage de la deuxième zone (3).

3. Agencement selon la revendication 2, **caractérisé en ce que** l'unité d'entraînement (6) est agencée pour comparer la/les indication(s) du premier détecteur (11) de la/des première(s) zone(s) (2) et la/les indication(s) du deuxième détecteur (12) de la/des deuxième(s) zone(s) (2) à une valeur de référence afin de déterminer les états de la première zone (2) et de la deuxième zone (3) ; de détecter des changements des états de la première zone et de la deuxième zone ; et de former un signal déclencheur (162) pour la/les caméra(s) (8) en réponse aux changements détectés des états.

4. Agencement selon la revendication 3, **caractérisé en ce que** l'unité d'entraînement (6) est également agencée pour en outre modifier le signal déclencheur (162).

5. Agencement selon la revendication 3 ou 4, **caractérisé en ce que** le double détecteur (5) est situé sur la zone sur laquelle la source d'image projette l'image ou hors de cette zone auquel cas un miroir (301) est situé sur la zone afin de réfléchir la première (2) et la deuxième (3) zone sur le double détecteur (5).

6. Agencement selon la revendication 5, **caractérisé en ce que** les premier (11) et deuxième (12) détecteurs du double détecteur (5) sont des photodiodes ou des phototransistors.

7. Agencement selon la revendication 5 ou 6, **caractérisé en ce que** la source d'image (1) est un projecteur, une télévision ou n'importe quel écran.

8. Agencement selon l'une quelconque des revendications 5 à 7, **caractérisé en ce qu'**un dôme diffus et translucide (102) sort entre la source d'image (1) et l'objet (106).

9. Agencement selon l'une quelconque des revendications 1 à 8, **caractérisé en ce que** l'agencement comprend des détecteurs de lumière (5) supplémentaires.

10. Agencement selon l'une quelconque des revendications 3 à 9, **caractérisé en ce que** l'unité d'entraînement (6) comprend des amplificateurs opérationnels (13) qui sont agencés pour comparer la/les indication(s) du premier détecteur (11) de la/des première(s) zone(s) (2) et la/les indication(s) du deuxième détecteur (12) de la/des deuxième(s) zone(s) (2) à une valeur de référence afin de déterminer lesdits états de la première zone (2) et de la deuxième zone (3), lesquels comparateurs sont en deux groupes, le premier groupe pour les états de la première zone et le deuxième groupe pour les états de la deuxième zone, chaque groupe ayant au moins un amplificateur opérationnel (13) .

11. Agencement selon la revendication 10, **caractérisé en ce que** l'unité d'entraînement (6) comprend un agencement de circuit logique (14, 15) afin de détecter des changements des états de la première zone (2) et de la deuxième zone (3).

12. Agencement selon la revendication 10, **caractérisé en ce que** l'unité d'entraînement (6) comprend un agencement de circuit d'amplificateur opérationnel (100) afin de détecter des changements des états de la première zone et de la deuxième zone.

13. Agencement selon la revendication 11 ou 12, **caractérisé en ce que** l'unité d'entraînement (6) comprend un agencement de circuit supplémentaire (107) afin de former le signal déclencheur (162).

14. Procédé pour un dispositif de mesure optique, lequel dispositif comprend au moins une source d'image afin de produire des images consécutives sur une surface d'un objet, au moins une caméra pour prendre des photos de la surface, et une unité de processeur afin de comparer les photos de la caméra avec lesdites images,
**caractérisé en ce que** le procédé comprend les étapes de fournir (120) une première zone et une deuxième zone sur les images, les première et deuxième zones étant éclairées sur des images en alternance de telle façon que lorsque la première zone est éclairée sur l'image, la deuxième zone n'est pas éclairée, et la deuxième zone est éclairée sur l'image suivante mais pas la première zone,
détecter (121) la première zone éclairée et la deuxième zone éclairée,
indiquer (122) qu'un état de la première zone change et qu'un état de la deuxième zone change en réponse à la détection, et
déclencher (123) au moins une caméra, en réponse à l'indication des changements des états.

15. Procédé selon la revendication 14, **caractérisé en ce que** la phase d'indication comprend les étapes de comparer les indications de la/des première(s) zone(s) et de la/des deuxième(s) zone(s) à une valeur de référence pour déterminer les états de la première zone et de la deuxième zone ;
détecter les changements de la première zone et de la deuxième zone.
